(19) Europäisches Patentamt
European Patent Office
Office européen des brevets

(11) EP 3 313 933 B1

(12) EUROPEAN PATENT SPECIFICATION

(45) Date of publication and mention of the grant of the patent:
**27.11.2019 Bulletin 2019/48**

(21) Application number: **16736017.1**

(22) Date of filing: **22.06.2016**

(51) Int Cl.:
***C08L 23/12*** *(2006.01)* ***C08L 23/16*** *(2006.01)*
***C08F 210/16*** *(2006.01)*

(86) International application number:
**PCT/EP2016/064450**

(87) International publication number:
**WO 2016/207235 (29.12.2016 Gazette 2016/52)**

# (54) HDPE-CONTAINING IMPACT MODIFIER POLYOLEFIN COMPOSITION

HDPE-HALTIGE ELASTIFIKATORPOLYOLEFINZUSAMMENSETZUNG

COMPOSITION DE POLYOLEFINE MODIFICATRICE D'IMPACT CONTENANT DU HDPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2015 EP 15173695**

(43) Date of publication of application:
**02.05.2018 Bulletin 2018/18**

(73) Proprietor: **Basell Poliolefine Italia S.r.l.**
**20121 Milano (IT)**

(72) Inventors:
- **CAVALIERI, Claudio**
**44122 Ferrara (IT)**
- **GRAZZI, Michele**
**44122 Ferrara (IT)**
- **PANTALEONI, Roberto**
**44122 Ferrara (IT)**

(74) Representative: **Colucci, Giuseppe**
**Basell Poliolefine Italia S.r.l.**
**Intellectual Property**
**Piazzale G. Donegani 12**
**44122 Ferrara (IT)**

(56) References cited:
**EP-A1- 2 338 657**
**WO-A1-2005/103140**
**WO-A1-2010/112337**
**WO-A1-2010/115878**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 313 933 B1

## Description

FIELD OF THE INVENTION

The present disclosure relates to polyolefin compositions, particularly thermoplastic olefin compositions, to their preparation and to their use as impact modifiers in polyolefin blends. The thus-obtained polyolefin blends can be injection moulded into large objects which exhibit low values of thermal shrinkage in combination with enhanced mechanical properties, like impact strength and elongation at break.

BACKGROUND OF THE INVENTION

Impact modifier compositions, consisting of or comprising a prevailingly amorphous olefin copolymer, are often added in polyolefin compositions to enhance the impact resistance as required in many applications, such as automotive applications.

An advantage of using an impact modifier composition is that it can be added to many different kinds of polyolefins to achieve a final composition ready for production of articles such as automobile bumpers. Thus, there is a constant need for impact modifier compositions able to produce, by blending with various polyolefin materials, final compositions exhibiting a good balance of properties. In particular, the reduction of thermal shrinkage imparts a higher dimensional stability to the final articles.

It has now been found that, by properly selecting the kind and relative amounts of the propylene/ethylene copolymer components, it is possible to obtain an impact modifier composition with a particularly valuable set of physical and mechanical properties and particularly suited for preparing final polyolefin blends having excellent dimensional stability.

In particular, by using the impact modifier compositions of the present invention, it is possible to obtain polyolefin blends having high values of impact resistance and elongation at break, without impairing the thermal shrinkage.

SUMMARY OF THE INVENTION

Thus, according to a first aspect, the present invention provides a polyolefin composition comprising:

(A) 5-35% by weight of a propylene-based polymer containing 90% by weight or more of propylene units and containing 10% by weight or less of a fraction soluble in xylene at 25°C ($XS_A$), both the amount of propylene units and of the fraction $XS_A$ being referred to the weight of (A);

(B) 25-50% by weight, of an ethylene homopolymer containing 5% by weight or less of a fraction soluble in xylene at 25°C ($XS_B$) referred to the weight of (B); and

(C) 30-60% by weight, of a copolymer of ethylene and propylene containing from 25% to 75% by weight of ethylene units and containing from 55% to 95% by weight of a fraction soluble in xylene at 25°C ($XS_C$), both the amount of ethylene units and of the fraction $XS_C$ being referred to the weight of (C);

the amounts of (A), (B) and (C) being referred to the total weight of (A) + (B) + (C), wherein the composition has 20% by weight or more of a fraction obtained in the second fractionation step (fraction 2) in the preparative fractionation method as described herein, such fraction 2 having weight average molecular weight (Mw) of 80,000 g/mol or higher.

According to another aspect, the present invention provides a process for the preparation of the said polyolefin compositions, comprising at least three sequential polymerization steps, wherein components (A), (B) and (C) are prepared in separate subsequent steps, operating in each step, except the first step, in the presence of the polymer formed and the catalyst used in the preceding step.

According to a further aspect, the present invention provides polyolefin blends comprising the polyolefin composition as described above and at least 50% by weight, referred to the total weight of the polyolefin composition, of one or more additional polyolefins.

According to a still further aspect, the present invention provides formed articles, particularly injection molded articles, comprising the said polymer blends.

DETAILED DESCRIPTION OF THE INVENTION

For the present invention, the term "homopolymer" is meant to include polymers containing minor amounts of other monomers, while the term "copolymer" is meant to include also polymers containing more than one kind of comonomers, such as terpolymers.

In some embodiments the propylene-based polymer (A) may be present in amount of 10-30% by weight or, in

other embodiments, it may be present in amount of 15-25% by weight, referred to the total weight of (A) + (B) + (C).

In some embodiments the propylene-based polymer (A) may contain 95% by weight or more of propylene units or, in other embodiments, it may contain 97% by weight or more of propylene units, referred to the weight of (A). The propylene polymer (A) may be a homopolymer or it may be a copolymer containing units deriving from one or more comonomers selected from ethylene and $C_4$ to $C_{10}$ alpha-olefins. Specific examples of such alpha-olefin comonomers are butene-1, pentene-1, 4-methylpentene-1, hexene-1, octene-1 and decene-1. The propylene-based polymer (A) may also be a mixture of a homopolymer and of a copolymer.

In some embodiments, the propylene-based polymer (A) may contain 8% by weight or less of a fraction soluble in xylene at 25°C ($XS_A$) or, in other embodiments, it may contain 5% by weight or less of a fraction soluble in xylene at 25°C ($XS_A$), referred to the weight of (A).

In some embodiments the propylene-based polymer (A) may have a melt flow rate (230°C/2.16 kg) comprised between 50 and 200 g/10 min. or, in other embodiments, between 80 and 170 g/10 min..

In some embodiments the ethylene homopolymer (B) may be present in amount of 25-45% by weight or, in other embodiments, it may be present in amount of 30-40% by weight, referred to the total weight of (A) + (B) + (C).

In some embodiments, the ethylene homopolymer (B) may contain up to 5% by weight of comonomer units or, in other embodiments, it may contain up to 3% by weight of comonomer units, referred to the weight of (B). When comonomer units are present, they derive from one or more comonomers selected from $C_3$ to $C_8$ alpha-olefins. Specific examples of such alpha-olefin comonomers are propylene, butene-1, pentene-1, 4-methylpentene-1, hexene-1 and octene-1.

In some embodiments, the ethylene homopolymer (B) may contain 4% by weight or less of a fraction soluble in xylene at 25°C ($XS_B$) or it may contain 3% by weight or less of a fraction soluble in xylene at 25°C ($XS_B$), referred to the weight of (B).

In some embodiments the ethylene homopolymer (B) may have a melt flow rate (230°C/2.16 kg) comprised between 0.1 and 50 g/10 min. or, in other embodiments, between 0.1 and 30 g/10 min. or, in further embodiments, between 0.1 and 10 g/10 min..

In some embodiments the ethylene homopolymer (B) may have a density (determined according to ISO 1183 at 23°C) of from 0.940 to 0.965 g/cm$^3$.

In some embodiments the copolymer of ethylene and propylene (C) may be present in amount of 35-55% by weight or, in other embodiments, it may be present in amount of 40-55% by weight, referred to the total weight of (A) + (B) + (C).

In some embodiments the copolymer of ethylene and propylene (C) may contain from 35% to 70% by weight of ethylene units or, in other embodiments, it may contain from 45% to 65% by weight of ethylene units, referred to the weight of (B).

In some embodiments, the copolymer of ethylene and propylene (C) may contain from 60% to 90% by weight of a fraction soluble in xylene at 25°C ($XS_C$) or, in other embodiments, it may contain from 65% to 85% by weight of a fraction soluble in xylene at 25°C ($XS_C$), referred to the weight of (C).

In some embodiments, the copolymer of ethylene and propylene (C) may also contain from 10% to 30% by weight or, in other embodiments, from 15% to 25% by weight of an alpha-olefin having 4 to 8 carbon atoms. Examples of such C4-C8 alpha-olefins are 1-butene, 1-hexene and 1-octene.

In some embodiments the polyolefin composition of the invention may have a melt flow rate (230°C/2.16 kg) comprised between 0.1 and 6.0 g/10 min. or, in other embodiments, between 0.5 and 5.5 g/10 min. or, in further embodiments, between 1.0 and 5.0 g/10 min..

In some embodiments the polyolefin composition of the invention may contain from 20% to 60% by weight, of a fraction soluble in xylene at 25°C ($XS_{TOT}$) or, in other embodiments, it may contain from 30% to 50% by weight, of a fraction soluble in xylene at 25°C.

In some embodiments the polyolefin composition of the invention may have an intrinsic viscosity [η] (measured in tetrahydronaphthalene at 135 °C) of the XS fraction of 1.0 dl/g or more or, in other embodiments, comprised between 2.0 and 4.0 dl/g.

In some embodiments the polyolefin composition of the invention may have a total content of ethylene units (determined by IR analysis) of 50% by weight or higher, or, in other embodiments, of 55% by weight or higher, or, in further embodiments, of 60% by weight or higher.

In some embodiments the polyolefin composition of the invention may have one or more of the following additional features:

- when fractioned according to the preparative fractionation method as described herein, the fraction 2 dissolved at 100°C shows the following features:

  Amount of 20 wt% or higher, or of 25 wt% or higher

Mw (determined via GPC) of 80,000 g/mol or higher, of 100,000 g/mol or higher;
ethylene units (mol %) > 95.0;
Triad EEE > 95.0, or > 96.0;
0.1 < PPP < 2.0;
0.1 < EPE < 1.0;
PPE and PEP not detectable;

- density of from 0.89 to 0.91 g/cm$^3$;
- flexural modulus of from 100 to 500 MPa;
- two melting peaks, one at temperature of from 120 °C to 130 °C and another at temperature of 160 °C or higher;
- glass transition temperature (Tg) from -40 °C to -50 °C;
- an amount of total fraction extractable in hexane of 10% or less by weight;
- Shore hardness (Shore D - ISO 868) of 25 to 35;
- Vicat softening temperature A/50 (ISO 306) of from 40 °C to 100 °C;
- elongation at break higher than 100%;
- longitudinal shrinkage lower than 0.65%; and/or
- IZOD impact strength at -30 °C higher than 30 KJ/m$^2$, preferably higher than 40 KJ/m$^2$.

While no necessary limitation is known to exist in principle on the kind of polymerization process and catalysts to be used, it has been found that the polyolefin compositions of the invention can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus in a preferred embodiment, the ethylene polymer composition of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

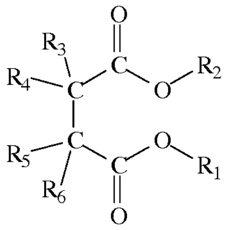

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The polyolefin compositions of the present invention can also contain additives commonly employed in the art, such as antioxidants, light stabilizers, heat stabilizers, colorants and fillers.

According to an alternate embodiment, the present polyolefin compositions can be prepared as a physical blend of the separately-prepared components rather than as a reactor blend.

As previously said, the polyolefin composition of the present invention can be advantageously compounded with additional polyolefins, in particular propylene polymers such as propylene homopolymers, random copolymers, thermoplastic elastomeric polyolefin compositions and plastomers. Accordingly, a second embodiment of the invention relates to a polyolefin composition containing the above-defined ethylene polymer composition. Preferably, the said polyolefin composition comprises at least 50% by weight, typically from 50% to 90% by weight, of one or more additional polyolefins, thus 50% or less, typically from 10% to 50% by weight, of the ethylene polymer composition according to the present invention, all per cent amounts being referred to the total weight of the ethylene polymer composition and of the additional polyolefin or polyolefins.

Practical examples of the said additional polyolefins are the following polymers:

1) crystalline propylene homopolymers, in particular isotactic or mainly isotactic homopolymers;

2) crystalline propylene copolymers with ethylene and/or a $C_4$-$C_{10}$ $\alpha$-olefin, wherein the total comonomer content ranges from 0.05 to 20% by weight with respect to the weight of the copolymer, and wherein preferred $C_4$-$C_{10}$ $\alpha$-olefins are 1-butene; 1-hexene; 4-methyl-1-pentene and 1-octene;

3) crystalline ethylene homopolymers and copolymers with propylene and/or a $C_4$-$C_{10}$ $\alpha$-olefin, such as HDPE;

4) thermoplastic elastomeric compositions comprising one or more of propylene homopolymers and/or the copolymers of item 2) and an elastomeric moiety comprising one or more copolymers of ethylene with propylene and/or $C_4$-$C_{10}$ $\alpha$-olefins, optionally containing minor quantities of a diene, such as butadiene, 1,4-hexadiene, 1,5-hexadiene and ethylidene-1-norbornene, wherein the diene content is typically from 1 to 10% by weight, typically prepared according to known methods by mixing the components in the molten state or by sequential polymerization, and generally containing the said elastomeric moiety in quantities from 5 to 80% by weight;

5) ethylene copolymers containing up to 45% by weight, in particular from 10 to 42% by weight, of an olefin comonomer, preferably a C3-C10 $\alpha$-olefin, in particular butene-1 or octene-1, and having Shore A hardness of 90 points or less;

6) propylene copolymers containing up to 40% by weight of an olefin comonomer, preferably ethylene or a C4-C10 $\alpha$-olefin, and having Shore A hardness of 90 points or less.

Specific examples of ethylene copolymers 5) are products marketed by Dow Chemical under the trademark Engage™ and Affinity™ or by ExxonMobil Chemical under the trademark Exact™.

Specific examples of propylene copolymers 6) are products marketed by Dow Chemical under the trademark Versify™, by ExxonMobil Chemical under the trademark Vistamaxx™ and by Mitsui Chemicals under the trademark Notio™.

The polyolefin blends may be manufactured by mixing the ethylene polymer composition and the additional polyolefin(s) together, extruding the mixture, and pelletizing the resulting composition using known techniques and apparatus.

The polyolefin blends may also contain conventional additives such as mineral fillers, fibers, colorants and stabilizers. Mineral fillers that can be included in the composition include talc, $CaCO_3$, silica, such as wollastonite ($CaSiO_3$), clays, diatomaceaous earth, titanium oxide and zeolites. Typically the mineral filler is in particle form having an average diameter ranging from 0.1 to 5 micrometers. Fibers that can be included in the composition include glass fibers, carbon fibers, metallic or ceramic fibers.

The present invention also provides articles, in particular injection molded articles, such as finished parts for the automotive industry, made of or comprising the said polyolefin blends.

## EXAMPLES

The practice and advantages of the various embodiments, compositions and methods as provided herein are disclosed below in the following examples. These examples are illustrative only, and are not intended to limit the scope of the invention in any manner whatsoever.

The following analytical methods are used to characterize the polymer compositions.

### Melting temperature (ISO 11357-3)

Determined by differential scanning calorimetry (DSC). A sample weighting 6 $\pm$ 1 mg is heated to 200 $\pm$ 1 °C at a rate of 20 °C/min and kept at 200 $\pm$ 1 °C for 2 minutes in nitrogen stream and is thereafter cooled at a rate of 20° C/min to 40 $\pm$ 2 °C, thereby kept at this temperature for 2 min to crystallize the sample. Then, the sample is again melted at a temperature rise rate of 20° C/min up to 200 °C $\pm$ 1. The melting scan is recorded, a thermogram is obtained, and, from this, temperatures corresponding to peaks are read. The temperature corresponding to the two most intense melting peaks recorded during the second fusion is taken as the melting temperature. The fusion enthalpy $\Delta H_{fus}$ is measured on both said most intense melting peaks. Obviously, if only one peak is detected, both melting temperature and $\Delta H_{fus}$ are provided by (i.e. measured on) such peak. To determine fusion enthalpy $\Delta H_{fus}$, construct the base-line by connecting the two closest points at which the melting endotherm peak deviate from the baseline. The heat of fusion ($\Delta H_{fus}$) is then calculated by integrating the area between DSC heat flow recorded signal and constructed baseline.

### Xylene soluble fraction

2.5 g of polymer and 250 $cm^3$ of o-xylene are introduced in a glass flask equipped with a refrigerator and a magnetical stirrer. The temperature is raised in 30 minutes from room temperature up to the boiling point of the solvent (135°C). The so obtained clear solution is then kept under reflux and stirring for further 30 minutes. The closed flask is

then kept in a thermostatic water bath at 25 °C for 30 minutes as well so that the crystallization of the insoluble (XI) part of the sample takes place. The so formed solid is filtered on quick filtering paper. 100 $cm^3$ of the filtered liquid is poured in a previously weighed aluminum container which is heated on a heating plate under nitrogen flow, to remove the solvent by evaporation. The container is then kept in an oven at 80 °C under vacuum to dryness and then weighed after constant weight is obtained. Thus one calculates the percent by weight of polymer soluble and insoluble in xylene at 25 °C.

Melt Flow Rate

Measured according to ISO 1133 at 230°C with a load of 2.16 kg, unless otherwise specified.

Intrinsic viscosity [η]

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

Ethylene comonomer content

The content of comonomer was determined by infrared spectroscopy by collecting the IR spectrum of the sample vs. an air background with a Fourier Transform Infrared spectrometer (FTIR). The instrument data acquisition parameters were:

purge time: 30 seconds minimum
collect time: 3 minutes minimum
apodization: Happ-Genzel
resolution: 2 cm-1.

Sample *Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at ~720 $cm^{-1}$ of 1.3 a.u. (% Transmittance > 5%). Molding conditions were 180±10°C (356°F) and pressure was around 10 kg/$cm^2$ (142.2 PSI) for about one minute. The pressure was then released, the sample removed from the press and cooled to room temperature. The spectrum of pressed film sample was recorded in absorbance vs. wavenumbers ($cm^{-1}$). The following measurements were used to calculate ethylene (C2) content:

a) Area ($A_t$) of the combination absorption bands between 4482 and 3950 $cm^{-1}$ which is used for spectrometric normalization of film thickness.

b) Area ($A_{C2}$) of the absorption band due to methylenic sequences ($CH_2$ rocking vibration) in the range 660 to 790 $cm^{-1}$ after a proper digital subtraction of an isotactic polypropylene (IPP) reference spectrum.

The ratio $A_{C2}$ / $A_t$ was calibrated by analyzing ethylene-propylene standard copolymers of known compositions, determined by NMR spectroscopy. A calibration straight line was obtained by plotting $A_{C2}/A_t$ versus ethylene weight percent (%$C_2$ wt) and the slope g was calculated from a linear regression. The spectra of the unknown samples were recorded and then the corresponding ($A_t$), ($A_{C2}$) of the unknown sample were calculated. Finally the ethylene content (% $C_2$ wt) of the sample was calculated as follows:

$$\%C2wt = \frac{\frac{A_{C2}}{A_t}}{g}$$

Preparative fractionations were carried out on base polymers by using a specific dissolution and crystallization protocol. Then a progressive dissolution is performed to collect polymer fractions. Polymer fractionation is performed

using PREP mc2 (Polymer Characterization, S.A.). Ortho xylene stabilised with Irganox 1010 is used for all following steps.

PREP mc2 vessel was charged by feeding 0.4 g of polymer and 100 ml of o-xylene at room temperature. Initial dissolution step is carried out by increasing the temperature from room temperature up to 130°C (heating ramp 20°C/min). The vessel temperature remains at 130°C for 60 minutes under discontinuous stirring (220 rpm). A subsequent stabilization is carried out for 5 minutes at 125°C under discontinuous stirring (150 rpm).

Crystallization step is carried out lowering the temperature from 125°C to 77 °C with a cooling rate of 0.10 °C/minute in 480 minutes. At 77 °C an equilibration step is planned (200 minutes without stirring). After this, the progressive sample fractionation starts collecting solutions at 3 different dissolution temperatures (77, 100 and 130 °C). For each temperature, 3 dissolutions are performed and 3 fractions were collected named fraction 1 (dissolution temperature 77°C), fraction 2 (dissolution temperature 100°C) and fraction 3 (dissolution temperature 130°C). For the first temperature (77°C) after 30 minutes under discontinuous stirring (150 rpm), the first polymer solution is collected by emptying the vessel. 100 ml of fresh solvent are then added, the temperature was equilibrated at 77 °C (20°C/minute) and after 30 minutes under discontinuous stirring (150 rpm) the second polymer solution is collected. The same step is repeated for the third solution. The temperature is then raised to 100°C (20°C/minute) and after an equilibration step of 30 minutes under discontinuous stirring (150 rpm) the first polymer solution is collected. The second and the third solutions are collected as previously described (fraction at 77°C). The temperature is then raised to 130° and three are solutions collected as described in the 100°C step.

Fractions collected at the same temperature are gathered in the same vessel, concentrated by solvent evaporation and then recovered by precipitation using acetone addition (the acetone volume is 2 times the final polymer solution volume). The polymer is filtrated and weighted after drying in vacuum oven at 75°C and under nitrogen flux. The drying, cooling and weighting steps are repeated until 2 consecutive weighing agree within 0.0002 g.

The relative amount of polymer collected for each temperature is estimated in weight % (using as 100% the total recovered polymer). In this protocol the polymer oligomers are not recovered and it is assumed that they count for 1 wt%. The experiment is considered successful if the difference between the initial polymer weight and the total recovered one is less than 2%.

Repeated experiments provided a confidence interval lower that 5%.

$^{13}C$ NMR

$^{13}C$ NMR spectra of base polymers and their fractions were acquired on a Bruker AV600 spectrometer equipped with cryo probe, operating 150.91 MHz MHz in the Fourier transform mode at 120 °C.

The peak of the Sδδ carbon (nomenclature according C.J. Carman, R.A. Harrington and C.E. Wilkes, Macromolecules, 10, 3, 536 (1977)) was used as internal reference at 29.97 ppm. About 30 mg of sample were dissolved in 0.5 ml of 1,1,2,2 tetrachloro ethane d2 at 120 °C. Each spectrum was acquired with a 90 ° pulse, 15 seconds of delay between pulses and CPD to remove 1H-$^{13}C$ coupling. 512 transients were stored in 65 K data points using a spectral window of 9000 Hz. The assignments of the spectra were made according to Kakugo [M. Kakugo, Y. Naito, K. Mizunuma and T. Miyatake, Macromolecules, 16, 4, 1160 (1982)].

Triad distribution was obtained using the following relations:

$$PPP = 100\ I_6 /\Sigma$$

$$PPE = 100\ I_3 /\Sigma$$

$$EPE = 100\ I_2 /\Sigma$$

$$PEP = 100\ I_7 /\Sigma$$

$$PEE = 100\ I_1/\Sigma$$

$$EEE = 100\ (0.5\ I_5 + 0.25\ I_4)/\Sigma$$

wherein

$$\Sigma = I_1 + I_2 + I_3 + 0.25\ I_4 + 0.5\ I_5 + I_6 + I_7$$

and $I_1$ to $I_7$ are the areas of the corresponding carbon as reported below (only selected triads and assignements being reported):

| Number | Chemical Shift (ppm) | Carbon | Sequence |
|---|---|---|---|
| $I_1$ | 37.64 - 37.35 | $S_{\alpha\delta}$ | PEE |
| $I_2$ | 33.13 | $T_{\delta\delta}$ | EPE |
| $I_3$ | 30.93 - 30.77 | $T_{\beta\delta}$ | PPE |
| $I_4$ | 30.29 | $S_{\gamma\delta}$ | PEEE |
| $I_5$ | 29.97 | $S_{\delta\delta}$ | EEE |
| $I_6$ | 29.14 -28.31 | $T_{\beta\beta}$ | PPP |
| $I_7$ | 24.88 - 24.14 | $S_{\beta\beta}$ | PEP |

The molar content of ethylene (E) and of propylene (P) is obtained from triads using the following relations:

$$E\ (m\%) = EEE + PEE + PEP$$

$$P\ (m\%) = PPP + PPE + EPE$$

Gel Permeation Chromatography (GPC)

Weight average molecular weight (Mw) was measured using a Viscotek 350A HT-GPC system equipped with four Agilent Olexis columns working at 150°C with 1,2,4-trichlorobenzene (TCB) stabilized with 0.250 mg/ml of 2,6-di-tert-butyl-4-methylphenol (BHT) at a flow rate of 1 ml/min. The samples were dissolved in TCB by stirring continuously at 150°C for 1 hour and then equilibrated at 135°C in the GPC autosampler before their injection. Solutions concentration of 1.5 mg/ml were prepared and 300 μl were injected for each sample solution. Column calibration was built using Agilent EasiCal monodisperse polystyrene (PS) standards (10 standards with peak molecular weight ranging from 508 to 7,500,000 gr/mol). Molecular weight equivalent for the polymer samples were calculated using the universal calibration. Mark-Houwink K and $\alpha$ values were:

$$K_{PS} = 1.21 \text{ x } 10^{-4} \text{ dL/g}, \alpha = 0.\ 706 \text{ for Polystyrene (PS);}$$

$$K_{PP} = 1.90 \text{ x } 10^{-4} \text{ dL/g}, \alpha = 0.725 \text{ for polypropylene (PP);}$$

$$K_{PE} = 4.06 \text{ x } 10^{-4} \text{ dL/g}, \alpha = 0.725 \text{ for polyethylene (PE).}$$

For copolymers containing ethylene and propylene the K value ($K_{EP}$) was estimated as a linear combination of the values for PP and PE taking into account the average composition of each sample or fraction:

$$K_{EP} = (100 - x_{PE})K_{PE} + x_{PP}K_{PP}$$

wherein $X_{PE}$ and $X_{PP}$ are the ethylene and the propylene wt. % content measured by $^{13}C$ NMR spectroscopy.

Tg determination via DMTA (Dynamic Mechanical Thermal Analysis)

Molded specimen of 20 mm x 5 mm x 1 mm are fixed to the DMTA machine for tensile stress. The frequency

of the sinusoidal oscillation is fixed at 1 Hz. The DMTA translate the elastic response of the specimen starting from -100°C (glassy state) to 130°C (softening point). In this way it is possible to plot the elastic response versus temperature. The elastic modulus in DMTA for a viscoelastic material is defined as the ratio between stress and strain also defined as complex modulus E*=E'+iE". The DMTA can split the two components E' and E" by their resonance and it is possible to plot E' (elastic component), E" (loss modulus) and E"/E'= tan δ (damping factor) vs temperature. The glass transition temperature Tg is assumed to be the temperature at the maximum of the curve tan = (δ) E"/E'vs temperature.

Shore D (Sh.D) Hardness

Measured on a compression moulded plaques (thickness of 4mm) following the ISO 868.

Hexane extractable fraction

Determined according to FDA 177.1520, by suspending in an excess of hexane a 100 μm thick film specimen of the composition being analyzed, in an autoclave at 50 °C for 2 hours. The hexane is then removed by evaporation and the dried residue is weighed

Flexural Modulus*

ISO 178, measured 24 hours after moulding.

Tensile strength at yield*

ISO 527, measured 24 hours after moulding.

Tensile strength at break*

ISO 527, measured 24 hours after moulding.

Elongation at break and at yield*

ISO 527, measured 24 hours after moulding.

Notched IZOD impact test*

ISO 180/1A, measured at 23 °C, -20 °C and -30 °C, 24 hours after moulding.

Vicat temperature*

Determined according to DIN EN ISO 306, after 24 hours (10 N load).

Heat distortion temperature (HDT)*

Determined according to ISO 75, after 24 hours.
Note: *Test specimens prepared by injection moulding according to ISO 1873-2: 1989.

Gloss at 60°

A ISO D1 plaque of 1 mm is moulded in an injection moulding machine "NB 60" (where 60 stands for 60 tons of clamping force) in accordance with the following parameters.

- Melt temperature = 260°C,
- Mold temperature = 40°C,
- Injection speed = 100 mm/sec,
- Holding time = 10 sec,
- Screw rotation = 120 rpm

Injection and Holding pressures are properly set-up in order to assure a complete filling of the mold thus avoiding flashes.

Alternatively an injection moulding machine "NB VE70" (where 70 stands for 70 tons of clamping force) can also be used. Gloss @ 60° is measured on the plaque according to ASTM D 2457.

Longitudinal and transversal thermal shrinkage

A plaque of 100 x 200 x 2.5 mm is moulded in an injection moulding machine "SANDRETTO serie 7 190" (where 190 stands for 190 tons of clamping force).
The injection conditions are:

- melt temperature = 250°C;
- mould temperature = 40°C;
- injection time = 8 seconds;
- holding time = 22 seconds;
- screw diameter = 55 mm.

The plaque is measured 24 hours after moulding, through callipers, and the shrinkage is given by:

$$\text{Longitudinal shrinkage} = \frac{200 - read_value}{200} \text{ x } 100$$

$$\text{Transversal shrinkage} = \frac{100 - read_value}{100} \text{ x } 100$$

wherein 200 is the length (in mm) of the plaque along the flow direction, measured immediately after moulding; 100 is the length (in mm) of the plaque crosswise the flow direction, measured immediately after moulding; the read_value is the plaque length in the relevant direction.

**Examples 1-3 (invention) and 4C-6C (comparison) - Preparation of polyolefin composition**

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal $MgCl2 \cdot 2.8C2H5OH$ was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the microspheroidal $MgCl2 \cdot 1.16C2H5OH$ adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.
The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (A) is produced by feeding in a continuous and constant flow the prepolymerized catalyst system, hydrogen (used as molecular weight regulator) and propylene all in the gas state. The propylene-based polymer (A) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor an ethylene-based polymer (B) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (C) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition. The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite.

The characteristics relating to the polymer composition, reported in Table 2, are obtained from measurements carried out on the so extruded polymer, which constitutes the stabilized ethylene polymer composition according to the exemplary embodiments disclosed herein.

**Examples 7-9 (invention) and 10C-12C (comparison) - Preparation of polyolefin blends**

The stabilized polyolefin composition prepared as described above were blended at 35% by extrusion under the previously described conditions with the additional components reported below:

- 51.5% by weight of Moplen 2000HEXP an heterophasic polypropylene commercialized by LyondellBasell;
- 12% by weight of talc HTP Ultra 5C: fine talc powder comprising about 98% by weight of particles having particle size of less than 5 μm;
- 1,3% by weight of carbon black master-batch having total MFR of about 0.6 g/10 min. (measured according to ISO 1133 at 230°C / 5 kg load) and made of 40% by weight of carbon black and 60% of a copolymer of propylene with 8% by weight of ethylene, having MFR of about 45 g/10 min;
- 0.1% by weight of Irganox® 1010;
- 0.1% by weight of Irgafos® 168.

The talc filled stabilized blend was extruded under nitrogen atmosphere in a twin screw extruder Leistritz 27mm (length/diameter ratio of screws: 40) in the following conditions:

| | |
|---|---|
| - Rotation speed: | 350 rpm; |
| - Extruder output: | 25 kg/hour; |
| - Melt temperature: | 240 °C |

The properties of the so obtained final composition are also reported in Table 3.

**Table 1 - Polymerization conditions**

| **Example** | | **1** | **2** | **3** | **4C** | **5C** | **6C** |
|---|---|---|---|---|---|---|---|
| **1st Reactor - component (A)** | | | | | | | |
| Temperature | °C | 60 | 61 | 60 | 60 | 69 | 60 |
| Pressure | Barg | 16 | 16 | 16 | 18 | 18 | 16 |
| $H_2/C_3$- | mol. | 0.20 | 0.23 | 0.20 | 0.20 | 0.16 | 0.23 |
| **Split** | **wt%** | **20** | **19** | **20** | **25** | **37** | **23** |
| Xylene soluble of (A) ($XS_A$) | wt% | 4.0 | 4.3 | 3.6 | 2.9 | 2.6 | 3.9 |
| MFR of (A) | g/10 min. | 96 | 96 | 100 | 160 | 130 | 160 |
| **2nd Reactor - component (B)** | | | | | | | |
| Temperature | °C | 80 | 85 | 81 | 60 | 82 | 96 |
| Pressure | Barg | 17 | 18 | 17 | 16 | 18 | 18 |
| $H_2/C_2$- | mol. | 0.30 | 1.01 | 0.30 | 0.10 | 0.21 | 0.75 |
| $C_2$-/($C_2$- + $C_3$-) | mol. | 0.95 | 0.94 | 0.9 | 0.49 | 0.99 | 0.99 |
| **Split** | **wt%** | **32** | **34** | **31** | **30** | **20** | **36** |
| $C_2$- content of B * | wt% | 100 | 100 | 100 | 61 | 100 | 100 |
| $C_2$- content of (A+ B) | wt% | 60.6 | 63.9 | 60.8 | 33.3 | 36 | 62.3 |
| Xylene soluble of B ($XS_B$) * | wt% | 1.0 | 1.0 | 1.0 | 76 | 1.0 | 1.0 |
| Xylene soluble of (A + B) | wt% | 2.0 | 1.5 | 1.5 | 42.0 | 2.0 | 2.0 |
| MFR of B ($MFR_B$)* | g/10 min. | 0.7 | 8.5 | 0.4 | 0.14 | 0.3 | 37 |
| MFR of (A + B) | g/10 min. | 4.6 | 20.4 | 3.30 | 3.45 | 52.8 | 64 |
| **3rd Reactor - component (C)** | | | | | | | |
| Temperature | °C | 65 | 65 | 65 | 60 | 60 | 65 |
| Pressure | Barg | 18 | 18 | 18 | 16 | 16 | 18 |
| $H_2/C_2$- | mol. | 0.25 | 0.26 | 0.31 | 0.10 | 0.10 | 0.30 |
| $C_2$-/($C_2$- + $C_3$-) | mol. | 0.47 | 0.48 | 0.45 | 0.49 | 0.49 | 0.47 |
| **Split** | **wt%** | **48** | **47** | **49** | **45** | **43** | **41** |
| $C_2$- content of C* | wt% | 63 | 63 | 62 | 61 | 60 | 64 |
| $C_2$- content of (A + B + C) | wt% | 62.1 | 63.9 | 61.8 | 44.5 | 45.8 | 64.4 |
| Xylene soluble of (C) ($XS_C$)* | wt% | 74 | 74 | 75 | 76 | 76 | 72 |
| Notes: C2- = ethylene (IR); C3- = propylene (IR); split = amount of polymer produced in the concerned reactor. *Calculated values. | | | | | | | |

**Table 2 - Properties of polymer composition**

| **Example** | | **1** | **2** | **3** | **4C** | **5C** | **6C** |
|---|---|---|---|---|---|---|---|
| MFR | g/10 min. | 0.70 | 1.29 | 0.87 | 0.69 | 2.29 | 6.71 |
| Density | gr/cc | 0.898 | 0.904 | 0.897 | n.a. | n.a. | 0.910 |
| ΔH fus | J/g | 70.1 | 78.0 | 72.7 | 34.5 | 78.2 | 75.7 |
| Tm1 | °C | 126.6 | 129.0 | 126.8 | 118.4 | 130.1 | 129.4 |

(continued)

| Example | | 1 | 2 | 3 | 4C | 5C | 6C |
|---|---|---|---|---|---|---|---|
| Tm2 | °C | 163.6 | 163.6 | 163.1 | 160.4 | 162.1 | 159.4 |
| Xylene soluble ($XS_{TOT}$) | wt% | 36.7 | 34.9 | 39.6 | 54.9 | 32.7 | 28.5 |
| Intrinsic Viscosity of $XS_{TOT}$ | dl/g | 2.67 | 2.77 | 2.27 | 3.38 | 3.44 | 2.22 |
| $C_2$- content of $XS_{TOT}$ | wt% | 55.3 | 57.8 | 54.7 | 54.6 | 53.9 | 57.5 |
| Total $C_2$- content | wt% | 65.8 | 66.0 | 63.2 | 44.5 | 49.9 | 63.4 |
| Flexural Modulus | MPa | 210 | 260 | 195 | 170 | 410 | 510 |
| Vicat temperature | °C | 73.7 | 79.4 | 64.5 | n.a. | n.a. | n.a. |
| HDT | °C | 42.4 | 45.8 | 40.0 | n.a. | n.a. | n.a. |
| Tg of (A)+(B)+(C) | °C | -48 | -48 | -48 | -43 | -46 | -46 |
| Shore D | - | 28 | 31 | 27 | 17 | n.a. | 38 |
| n-$C_6$+ extractable | % | 5.0 | 3.5 | 7.8 | 45.3 | n.a. | 2.5 |
| E(m%) | % | 71.2 | 71.2 | 69.9 | 52.2 | 61.6 | 68.1 |
| EEE | % | 56.1 | 57.1 | 55.8 | 32.0 | 49.7 | 57.9 |
| PEE | % | 12.0 | 11.3 | 11.3 | 15.6 | 9.2 | 8.0 |
| PEP | % | 3.2 | 2.8 | 2.8 | 4.5 | 2.6 | 2.1 |
| PPP | % | 16.2 | 17.5 | 18.1 | 30.7 | 28.8 | 23.5 |
| PPE | % | 6.1 | 5.2 | 5.7 | 9.3 | 5.0 | 4.2 |
| EPE | % | 6.5 | 6.0 | 6.3 | 7.9 | 4.7 | 4.2 |
| Fraction 2 | (wt%) | 31.8 | 30.5 | 32.2 | 4.2 | 29.6 | 35.2 |
| E(m%) - fraction 2 | % | 99.2 | 99.4 | 97.5 | 97.1 | 99.6 | 99.7 |
| EEE - fraction 2 | % | 97.8 | 98.7 | 96.1 | 94.4 | 98.9 | 99.3 |
| PEE - fraction 2 | % | 1.4 | 0.7 | 1.4 | 2.5 | 0.7 | 0.4 |
| PEP- fraction 2 | % | n.d. | n.d. | n.d. | 0.2 | n.d. | n.d. |
| PPP- fraction 2 | % | 0.1 | 0.3 | 1.9 | 1.5 | 0.1 | 0.1 |
| PPE- fraction 2 | % | n.d. | n.d. | n.d. | 0.3 | n.d. | n.d. |
| EPE- fraction 2 | % | 0.7 | 0.3 | 0.6 | 1.1 | 0.4 | 0.2 |
| Mw - fraction 2 | gr/mol | 235400 | 109450 | 209750 | n.a. | 220130 | 74568 |
| $\Delta$H fus - fraction 2 | J/g | 161.8 | 184.9 | 159.3 | 133.2 | 175.5 | n.a. |
| Tm1 - fraction 2 | °C | 131.1 | 134.6 | 132.3 | 127.8 | 134.8 | n.a. |
| n.a. = not available; n.d. = not detectable | | | | | | | |

**Table 3 - Properties of compounds**

| Example | | 7 | 8 | 9 | 10C | 11C | 12C |
|---|---|---|---|---|---|---|---|
| MFR | g/10 min. | 4.9 | 7.0 | 5.9 | 6.0 | 5.8 | 13.5 |
| Flexural Modulus | MPa | 1000 | 1080 | 960 | 1100 | 1180 | 1230 |
| Tensile Strength at Yield | MPa | 13.9 | 14.8 | 13.5 | 13.4 | 14.9 | 16.6 |
| Elongation at Yield | % | 8.0 | 7.6 | 7.8 | 4.4 | 4.0 | 6.5 |

(continued)

| Example | | 7 | 8 | 9 | 10C | 11C | 12C |
|---|---|---|---|---|---|---|---|
| Tensile strength at break | MPa | 9.8 | 10.6 | 10.7 | 11.0 | 12.0 | 12.4 |
| Elongation at break | % | 120 | 145 | 160 | 60 | 35 | 90 |
| Gloss at 60° | ‰ | 13 | 16 | 17 | 16 | 13 | 33 |
| Longitudinal shrinkage | % | 0.45 | 0.61 | 0.39 | 0.48 | 0.68 | 0.60 |
| Transversal shrinkage | % | 0.62 | 0.88 | 0.57 | 0.66 | 0.85 | 0.78 |
| IZOD Impact Str. at 23° C | $KJ/m^2$ | 63.3 | 60.7 | 58.9 | 63.3 | 55.3 | 51.1 |
| IZOD Impact Str. at -20°C | $KJ/m^2$ | 64.6 | 56.8 | 64.4 | 37.7 | 16.5 | 12.0 |
| IZOD Impact Str. at -30°C | $KJ/m^2$ | 55.2 | 42.0 | 59.2 | 18.0 | 15.5 | 7.3 |

## Claims

1. A polyolefin composition comprising:

   (A) 5-35% by weight of a propylene-based polymer containing 90% by weight or more of propylene units and containing 10% by weight or less of a fraction soluble in xylene at 25°C ($XS_A$), both the amount of propylene units and of the fraction $XS_A$ being referred to the weight of (A);
   (B) 25-50% by weight, of an ethylene homopolymer containing 5% by weight or less of a fraction soluble in xylene at 25°C ($XS_B$) referred to the weight of (B); and
   (C) 30-60% by weight, of a copolymer of ethylene and propylene containing from 25% to 75% by weight of ethylene units and containing from 55% to 95% by weight, of a fraction soluble in xylene at 25°C ($XS_C$), both the amount of ethylene units and of the fraction $XS_C$ being referred to the weight of (C);

   the amounts of (A), (B) and (C) being referred to the total weight of (A) + (B) + (C), wherein the composition has 20% by weight or more of a fraction obtained in the second fractionation step (fraction 2) in the preparative fractionation method as described herein, such fraction 2 having weight average molecular weight (Mw) of 80,000 g/mol or higher.

2. The polyolefin composition according to claim 1, wherein the propylene-based polymer (A) is present in amount of 15-25% by weight, referred to the total weight of (A) + (B) + (C).

3. The polyolefin composition according to claims 1 or 2, wherein the propylene-based polymer (A) is a homopolymer and contains 5% by weight or less of a fraction soluble in xylene at 25°C (XSA), referred to the weight of (A).

4. The polyolefin composition according to any of claims 1 to 3, wherein the propylene-based polymer (A) has a melt flow rate (230°C/2.16 kg) comprised between 80 and 170 g/10 min.

5. The polyolefin composition according to any of claims 1 to 4, wherein the ethylene homopolymer (B) is present in amount of 30-40% by weight, referred to the total weight of (A) + (B) + (C).

6. The polyolefin composition according to any of claims 1 to 5, wherein the ethylene homopolymer (B) has a melt flow rate (230°C/2.16 kg) comprised between 0.1 and 10 g/10 min.

7. The polyolefin composition according to any of claims 1 to 6, wherein the copolymer of ethylene and propylene (C) is present in amount of 40-55% by weight, referred to the total weight of (A) + (B) + (C).

8. The polyolefin composition according to any of claims 1 to 7, wherein the copolymer of ethylene and propylene (C) contains from 45% to 65% by weight of ethylene units, referred to the weight of (B).

9. The polyolefin composition according to any of claims 1 to 8, wherein the copolymer of ethylene and propylene (C) further contains from 10% to 30% by weight of an alpha-olefin having 4 to 8 carbon atoms.

**10.** The polyolefin composition according to claim 9, wherein the alpha-olefin having 4 to 8 carbon atoms is 1-butene.

**11.** The polyolefin composition according to any of claims 1 to 10, having:

a. a melt flow rate (230°C/2.16 kg) comprised between 1.0 and 5.0 g/10 min.;
b. a content of from 30% to 50% by weight of a fraction soluble in xylene at 25°C;
c. an intrinsic viscosity [η], measured in tetrahydronaphthalene at 135 °C, of the XS fraction comprised between 2.0 and 4.0 dl/g; and
d. a total content of ethylene units (determined by IR analysis) of 50% by weight or higher.

**12.** A process for the preparation of the polyolefin compositions of claims 1 to 11, the process comprising at least three sequential polymerization steps, wherein components (A), (B) and (C) are prepared in separate subsequent steps, operating in each step, except the first step, in the presence of the polymer formed and the catalyst used in the preceding step.

**13.** A polyolefin blend comprising the polyolefin composition of claims 1 to 11 and at least 50% by weight, referred to the total weight of the polyolefin composition, of one or more additional polyolefins.

**14.** Formed articles comprising the polyolefin blend of claim 13.

**15.** Formed articles according to claim 14, being injection moulded articles.

**Patentansprüche**

**1.** Polyolefinzusammensetzung, umfassend:

(A) 5 bis 35 Gew.% eines Polymers auf Propylenbasis, das 90 Gew.% oder mehr Propyleneinheiten enthält und 10 Gew.% oder weniger von einer in Xylol bei 25°C löslichen Fraktion ($XS_A$) enthält, wobei sich sowohl die Menge der Propyleneinheiten als auch diejenige der Fraktion $XS_A$ auf das Gewicht von (A) beziehen;
(B) 25 bis 50 Gew.% eines Ethylenhomopolymers, das 5 Gew.% oder weniger von einer in Xylol bei 25°C ($XS_B$) löslichen Fraktion enthält, bezogen auf das Gewicht von (B); und
(C) 30 bis 60 Gew.% eines Copolymers von Ethylen und Propylen, das 25 Gew.% bis 75 Gew.% Ethyleneinheiten enthält und 55 Gew.% bis 95 Gew.% von einer in Xylol bei 25 °C löslichen Fraktion ($XS_C$) enthält, wobei sich sowohl die Menge der Ethyleneinheiten als auch diejenige der Fraktion $XS_C$ auf das Gewicht von (C) beziehen;

wobei sich die Mengen von (A), (B) und (C) auf das Gesamtgewicht von (A) + (B) + (C) beziehen, wobei die Zusammensetzung 20 Gew.% oder mehr von einer Fraktion aufweist, die in dem zweiten Fraktionierungsschritt (Fraktion 2) in dem präparativen Fraktionierungsverfahren wie hier beschrieben erhalten wurde, wobei diese Fraktion 2 ein durchschnittliches Molekulargewicht (Gewichtsmittel) (Mw) von 80.000 g/mol oder höher aufweist.

**2.** Polyolefinzusammensetzung nach Anspruch 1, wobei das Polymer auf Propylenbasis (A) in einer Menge von 15 bis 25 Gew.% vorhanden ist, bezogen auf das Gesamtgewicht von (A) + (B) + (C).

**3.** Polyolefinzusammensetzung nach den Ansprüchen 1 oder 2, wobei das Polymer auf Propylenbasis (A) ein Homopolymer ist und 5 Gew.% oder weniger von einer in Xylol bei 25°C löslichen Fraktion ($XS_A$) enthält, bezogen auf das Gewicht von (A).

**4.** Polyolefinzusammensetzung nach einem der Ansprüche 1 bis 3, wobei das Polymer auf Propylenbasis (A) eine Schmelzflussrate (230 °C/2,16 kg) aufweist, die zwischen 80 und 170 g/10 min liegt.

**5.** Polyolefinzusammensetzung nach einem der Ansprüche 1 bis 4, wobei das Ethylenhomopolymer (B) in einer Menge von 30 bis 40 Gew.% vorhanden ist, bezogen auf das Gesamtgewicht von (A) + (B) + (C).

**6.** Polyolefinzusammensetzung nach einem der Ansprüche 1 bis 5, wobei das Ethylenhomopolymer (B) eine Schmelzflussrate (230 °C/2,16 kg) aufweist, die zwischen 0,1 und 10 g/10 min liegt.

**7.** Polyolefinzusammensetzung nach einem der Ansprüche 1 bis 6, wobei das Copolymer von Ethylen und Propylen

(C) in einer Menge von 40 bis 55 Gew.% vorhanden ist, bezogen auf das Gesamtgewicht von (A) + (B) + (C).

**8.** Polyolefinzusammensetzung nach einem der Ansprüche 1 bis 7, wobei das Copolymer von Ethylen und Propylen (C) 45 bis 65 Gew.% Ethyleneinheiten enthält, bezogen auf das Gewicht von (B).

**9.** Polyolefinzusammensetzung nach einem der Ansprüche 1 bis 8, wobei das Copolymer von Ethylen und Propylen (C) des Weiteren 10 bis 30 Gew.% alpha-Olefin mit 4 bis 8 Kohlenstoffatomen enthält.

**10.** Polyolefinzusammensetzung nach Anspruch 9, wobei das alpha-Olefin mit 4 bis 8 Kohlenstoffatomen 1-Buten ist.

**11.** Polyolefinzusammensetzung nach einem der Ansprüche 1 bis 10, welche aufweist:

a. eine Schmelzflussrate (230 °C/2,16 kg), die zwischen 1,0 und 5,0 g/10 min. liegt;
b. einen Gehalt von 30 Gew.% bis 50 Gew.% einer in Xylol bei 25 °C löslichen Fraktion;
c. eine in Tetrahydronaphthalin bei 135 °C gemessene Grenzviskosität [η] der XS-Fraktion, die zwischen 2,0 und 4,0 dl/g liegt; und
d. einen Gesamtgehalt an Ethyleneinheiten (bestimmt mittels IR-Analyse) von 50 Gew.% oder höher.

**12.** Verfahren zur Herstellung der Polyolefinzusammensetzungen der Ansprüche 1 bis 11, wobei das Verfahren mindestens drei aufeinander folgende Polymerisationsschritte umfasst, wobei Komponenten (A), (B) und (C) in separaten Folgeschritten hergestellt werden, wobei in jedem Schritt außer dem ersten Schritt in Gegenwart des in dem vorhergehenden Schritt gebildeten Polymers und verwendeten Katalysators gearbeitet wird.

**13.** Polyolefingemisch, umfassend die Polyolefinzusammensetzung der Ansprüche 1 bis 11 und mindestens 50 Gew.%, bezogen auf das Gesamtgewicht der Polyolefinzusammensetzung, von einem oder mehreren zusätzlichen Polyolefinen.

**14.** Formartikel, umfassend das Polyolefingemisch gemäß Anspruch 13.

**15.** Formartikel nach Anspruch 14, die Spritzgussartikel sind.

**Revendications**

**1.** Composition polyoléfinique comprenant :

(A) 5 à 35% en poids d'un polymère à base de propylène contenant 90% en poids ou plus de motifs de propylène et contenant 10% en poids ou moins d'une fraction soluble dans le xylène à 25°C ($XS_A$), à la fois la quantité de motifs de propylène et celle de la fraction $XS_A$ se rapportant au poids de (A) ;
(B) 25 à 50% en poids d'un homopolymère d'éthylène contenant 5% en poids ou moins d'une fraction soluble dans le xylène à 25°C ($XS_B$), par rapport au poids de (B) ; et
(C) 30 à 60% en poids d'un copolymère d'éthylène et de propylène contenant 25% à 75% en poids de motifs d'éthylène et contenant 55% à 95% en poids d'une fraction soluble dans le xylène à 25°C ($XS_C$), à la fois la quantité de motifs d'éthylène et celle de la fraction XSc se rapportant au poids de (C) ;

les quantités de (A), (B) et (C) se rapportant au poids total de (A) + (B) + (C), la composition comprenant 20% en poids ou plus d'une fraction obtenue dans la deuxième étape de fractionnement (fraction 2) dans le procédé préparatif par fractionnement tel que décrit ici, une telle fraction 2 présentant un poids moléculaire moyen en poids (Mw) de 80.000 g/mole ou plus.

**2.** Composition polyoléfinique selon la revendication 1, le polymère à base de propylène (A) étant présent en une quantité de 15 à 25% en poids, par rapport au poids total de (A) + (B) + (C).

**3.** Composition polyoléfinique selon les revendications 1 ou 2, le polymère à base de propylène (A) étant un homopolymère et contenant 5% en poids ou moins d'une fraction soluble dans le xylène à 25°C ($XS_A$), par rapport au poids de (A).

**4.** Composition polyoléfinique selon l'une quelconque des revendications 1 à 3, le polymère à base de propylène (A)

possédant un indice de fluidité à chaud (230°C/2,16 kg) compris entre 80 et 170 g/10 min.

**5.** Composition polyoléfinique selon l'une quelconque des revendications 1 à 4, l'homopolymère d'éthylène (B) étant présent en quantité de 30 à 40% en poids, par rapport au poids total de (A) + (B) + (C).

**6.** Composition polyoléfinique selon l'une quelconque des revendications 1 à 5, l'homopolymère d'éthylène (B) présentant un indice de fluidité à chaud (230°C/2,16 kg) compris entre 0,1 et 10 g/10 min.

**7.** Composition polyoléfinique selon l'une quelconque des revendications 1 à 6, le copolymère d'éthylène et de propylène (C) étant présent en quantité de 40-55% en poids, par rapport au poids total de (A) + (B) + (C).

**8.** Composition polyoléfinique selon l'une quelconque des revendications 1 à 7, le copolymère d'éthylène et de propylène (C) contenant 45% à 65% en poids de motifs d'éthylène, par rapport au poids de (B).

**9.** Composition polyoléfinique selon l'une quelconque des revendications 1 à 8, le copolymère d'éthylène et de propylène (C) contenant en outre 10% à 30% en poids d'une alpha-oléfine comprenant 4 à 8 atomes de carbone.

**10.** Composition polyoléfinique selon la revendication 9, l'alpha-oléfine comprenant 4 à 8 atomes de carbone étant le 1-butène.

**11.** Composition polyoléfinique selon l'une quelconque des revendications 1 à 10, présentant :

a. un indice de fluidité à chaud (230°C/2,16 kg) compris entre 1,0 et 5,0 g/10 min ;
b. une teneur en fraction soluble dans le xylène à 25°C de 30% à 50% en poids ;
c. une viscosité intrinsèque [η], mesurée dans le tétrahydronaphtalène à 135°C, de la fraction XS comprise entre 2,0 et 4,0 dl/g ; et
d. une teneur totale en motifs d'éthylène (déterminée par analyse IR) de 50% en poids ou plus.

**12.** Procédé de préparation des compositions polyoléfiniques selon les revendications 1 à 11, le procédé comprenant au moins trois étapes de polymérisation séquentielles, les constituants (A), (B) et (C) étant préparés dans des étapes subséquentes séparées, chaque étape, à l'exception de la première étape, étant mise en œuvre en présence du polymère formé et du catalyseur utilisé dans l'étape précédente.

**13.** Mélange polyoléfinique comprenant la composition polyoléfinique selon les revendications 1 à 11 et au moins 50% en poids, par rapport au poids total de la composition polyoléfinique, d'une ou de plusieurs polyoléfines supplémentaires.

**14.** Articles façonnés comprenant le mélange polyoléfinique selon la revendication 13.

**15.** Articles façonnés selon la revendication 14, qui sont des articles moulés par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4399054 A
- EP 45977 A
- EP 361493 A
- EP 728769 A


### Non-patent literature cited in the description


- **HUGGINS, M.L.** *J. Am. Chem. Soc.,* 1942, vol. 64, 2716
- **C.E. WILKES.** *Macromolecules,* 1977, vol. 10 (3), 536
- **M. KAKUGO ; Y. NAITO ; K. MIZUNUMA ; T. MIYATAKE.** *Macromolecules,* 1982, vol. 16 (4), 1160